# EUROPEAN PATENT APPLICATION

(11) **EP 4 414 672 A1**
(43) Date of publication of application: **14.08.2024**
(21) Application number: 21961749.5
(22) Date of filing: 27.10.2021
(51) Int. Cl.: G01J 9/00

(54) **LIGHT WAVELENGTH MEASUREMENT APPARATUS AND METHOD, AND LIGHT WAVELENGTH CONTROL DEVICE AND LIGHT-EMITTING SYSTEM**

(71) Applicant: Huawei Technologies Co., Ltd., Shenzhen, Guangdong 518129 (CN)
(72) Inventor: ZHOU, Lei, Shenzhen, Guangdong 518129 (CN)
(74) Representative: Isarpatent
(86) International application number: PCT/CN2021/126758
(87) International publication number: WO 2023/070378

(57) **Abstract**

This application provides an optical wavelength measurement apparatus and method, an optical wavelength control device, and a light emitting system. The optical wavelength measurement apparatus and method may be used to expand a wavelength range that can be detected by using an optical wavelength measurement technology. The optical wavelength control device and the light emitting system may be configured to provide laser with a stable wavelength. The measurement apparatus may respectively superimpose to-be-measured light with optical components that are in an optical frequency comb and that correspond to each of a plurality of comb frequency values, to obtain a multiplexed optical signal corresponding to each optical component, and then determine a measured value of a wavelength of the to-be-measured light based on an electrical signal of a multiplexed optical signal corresponding to a target optical component obtained by an electrical beat frequency. The electrical signal corresponding to the target optical component includes a beat frequency signal.

## Description

### TECHNICAL FIELD

This application relates to the field of optoelectronic technologies, and in particular, to an optical wavelength measurement apparatus and method, an optical wavelength control device, and a light emitting system.

### BACKGROUND

With rise of laser and optoelectronic technologies, optical detection has developed into an optical-based technology that closely intersects and mutually interpenetrates with information science, space science, precision machinery and manufacturing, computer science, a microelectronic technology, and the like. As an important branch of optical detection, optical wavelength measurement is widely applied to the technical fields above. The field of laser technologies is used as an example. An optical wavelength measurement apparatus is disposed in a laser, and the laser may measure a wavelength of generated laser, so that a light emitting parameter can be adjusted based on a measured value of the wavelength, to stabilize the wavelength of the laser at a fixed value.

A photonic detector is usually disposed in the optical wavelength measurement apparatus, and the photonic detector detects a change of an optical power over time, to measure the optical wavelength. However, due to a bandwidth limitation of the photonic detector, the photonic detector can only respond to a change of an optical power that is lower than a frequency value (referred to as a cutoff frequency value). As a result, an optical wavelength range that can be detected by the optical wavelength measurement apparatus is limited, and an optical wavelength measurement technology cannot be widely applied to the technical fields above.

### SUMMARY

Embodiments of this application provide an optical wavelength measurement apparatus and method, an optical wavelength control device, and a light emitting system, to expand a wavelength range that can be detected by using an optical wavelength measurement technology.

According to a first aspect, an embodiment of this application provides an optical wavelength measurement apparatus, including: a wavelength multiplexing generation module, configured to respectively superimpose to-be-measured light with a plurality of optical components, to obtain a multiplexed optical signal corresponding to each of the plurality of optical components, where the plurality of optical components include an optical component that is in an optical frequency comb and that corresponds to each of a plurality of comb frequency values of the optical frequency comb, and the multiplexed optical signal is light obtained through superposition; a photonic detector, configured to convert the multiplexed optical signal corresponding to each of the plurality of optical components into an electrical signal; and a signal processor, configured to determine a measured value of a wavelength of the to-be-measured light based on a target electrical signal corresponding to a target optical component in the plurality of optical components and a target comb frequency value corresponding to the target optical component, where the target electrical signal includes a beat frequency signal.

According to the optical wavelength measurement apparatus provided in embodiments of this application, the optical component that is in the optical frequency comb and that corresponds to each of the plurality of comb frequency values is respectively superimposed with the to-be-measured light, and a frequency value of the beat frequency signal in the multiplexed optical signal is detected to measure the wavelength of the to-be-measured light, so that a problem of detecting the wavelength of the to-be-measured light can be changed into a problem of detecting the beat frequency signal. Usually, the frequency value of the beat frequency signal is relatively small. For example, a frequency interval between the to-be-measured light and a comb that is closest to the to-be-measured light and that is in the optical frequency comb is less than a repetition frequency value of the optical frequency comb. In this case, even if a frequency value of the to-be-measured light is greater than a cutoff frequency value of the photonic detector, the signal processor may detect the frequency value of the beat frequency signal to obtain the frequency value of the to-be-measured light. This helps expand an optical wavelength range that can be detected by the optical wavelength measurement apparatus, and helps implement that optical wavelength measurement is widely applied to the field of optical technologies and other technical fields combined with the optical technologies.

In addition, each multiplexed optical signal received by the photonic detector is a multiplexed optical signal of an optical component corresponding to a single comb frequency value and the to-be-measured light. Therefore, after identifying a beat frequency signal in the electrical signal, the signal processor may determine the measured value of the wavelength of the to-be-measured light based on the comb frequency value of the optical component corresponding to the electrical signal and the frequency value of the beat frequency signal, which helps simplify a calculation process.

Optionally, the wavelength multiplexing generation module is specifically configured to sequentially superimpose the to-be-measured light with optical components in an optical component sequence, where the optical component sequence includes the plurality of optical components arranged in a target order. In this way, a quantity of optical paths in the optical wavelength measurement apparatus is reduced, thereby reducing costs and a volume of the measurement apparatus.

Optionally, the target order is a first order or a second order, and the target optical component is a first available optical component in the optical component sequence. An electrical signal corresponding to the available optical component includes the beat frequency signal. The first order is an ascending order of corresponding comb frequency values. The second order is a descending order of corresponding comb frequency values. If the optical component sequence is arranged in the first order or the second order, the first available optical component may be used as the target optical component. This helps accurately determine a difference between the frequency value of the to-be-measured light and the comb frequency value corresponding to the target optical component, thereby improving accuracy of a measurement result of the to-be-measured light.

Optionally, the wavelength multiplexing generation module includes an optical frequency comb generation unit, a wavelength selection unit, and a wavelength multiplexing unit. The optical frequency comb generation unit is configured to generate the optical frequency comb. The wavelength selection unit is configured to output the optical component sequence based on the optical frequency comb. The wavelength multiplexing unit is configured to superimpose optical components (namely, each optical component in the optical component sequence) output by the wavelength selection unit with the to-be-measured light, to obtain the multiplexed optical signal corresponding to each optical component. The optical frequency comb generation unit is disposed in the wavelength multiplexing generation module. This helps the wavelength selection unit to accurately output an optical component corresponding to a single comb frequency value, thereby improving accuracy of a wavelength measurement result.

Optionally, the wavelength selection unit includes a wavelength division demultiplexer, an optical switch array, and a wavelength division multiplexer. The wavelength division demultiplexer is configured to separate the plurality of optical components from the optical frequency comb. The plurality of optical components are respectively incident to a plurality of optical switches in the optical switch array, where each of the plurality of optical switches corresponds to one of the plurality of optical components. Each of the plurality of optical switches in the optical switch array is configured to receive one of the plurality of optical components, and the optical switch array is configured to sequentially turn on optical switches corresponding to corresponding optical components in the target order, to output the corresponding optical components. The wavelength division multiplexer is configured to combine output optical paths of each of the plurality of optical switches into one path (referred to as a target path), or combine propagation paths of the optical components output by each of the plurality of optical switches into a target path, to output the optical component sequence through the target optical path. Due to a high switching speed of the optical switch array, the wavelength selection unit can use the optical switch array to sequentially output the plurality of optical components to the wavelength division multiplexer in the target order. This is beneficial to duration corresponding to the optical component sequence, thereby helping identify the target electrical signal in a relatively short time, and improving test efficiency.

Optionally, the wavelength selection unit includes an optical filter. The optical filter is configured to sequentially separate the corresponding optical components from the optical frequency comb in the target order, to output the optical component sequence. A volume of the optical filter is usually smaller that of the optical switch array. Therefore, the wavelength selection unit can use the optical filter to sequentially separate the optical component sequence from the optical frequency comb, which helps reduce a volume of the optical wavelength measurement apparatus.

Optionally, the wavelength multiplexing unit includes a first polarization adjuster, a second polarization adjuster, and a wavelength multiplexer. The first polarization adjuster is configured to adjust each optical component in the optical component sequence to linearly polarized light in a first polarization direction. The second polarization adjuster is configured to adjust the to-be-measured light to linearly polarized light in a second polarization direction, where the first polarization direction is not perpendicular to the second polarization direction. The wavelength multiplexer is configured to superimpose each optical component adjusted by the first polarization adjuster with the to-be-measured light adjusted by the second polarization adjuster, to obtain a multiplexed optical signal corresponding to each optical component. This helps generate a stable beat effect in the multiplexed optical signal obtained through superposition, and detect the beat frequency signal from the electrical signal of the multiplexed optical signal.

According to a second aspect, an embodiment of this application provides an optical wavelength measurement method, including: respectively superimposing to-be-measured light with a plurality of optical components, to obtain a multiplexed optical signal corresponding to each of the plurality of optical components, where the plurality of optical components include an optical component that is in an optical frequency comb and that corresponds to each of a plurality of comb frequency values of the optical frequency comb; converting the multiplexed optical signal corresponding to each of the plurality of optical components into an electrical signal; and determining a measured value of a wavelength of the to-be-measured light based on a target electrical signal corresponding to a target optical component in the plurality of optical components and a target comb frequency value corresponding to the target optical component, where the target electrical signal includes a beat frequency signal.

Optionally, the respectively superimposing to-be-measured light with a plurality of optical components includes: sequentially superimposing the to-be-measured light with optical components in an optical component sequence, where the optical component sequence includes the plurality of optical components arranged in a target order.

Optionally, the target order is a first order or a second order, and the target optical component is a first available optical component in the optical component sequence. An electrical signal corresponding to the available optical component includes the beat frequency signal. The first order is an ascending order of corresponding comb frequency values. The second order is a descending order of corresponding comb frequency values.

Optionally, the respectively superimposing to-be-measured light with a plurality of optical components includes: adjusting each optical component in the optical component sequence to linearly polarized light in a first polarization direction; adjusting the to-be-measured light to linearly polarized light in a second polarization direction, where the first polarization direction is not perpendicular to the second polarization direction; and superimposing each adjusted optical component with adjusted to-be-measured light, to obtain a multiplexed optical signal corresponding to each optical component.

The method provided in the second aspect and the apparatus provided in the first aspect are based on a same inventive concept. Optionally, the embodiment method provided in the second aspect may be considered as a procedure corresponding to a process in which the optical wavelength measurement apparatus provided in the first aspect runs. For an implementation and technical effects that are not described in detail in embodiments of the second aspect, refer to the related descriptions in embodiments corresponding to the first aspect.

According to a third aspect, an embodiment of this application provides an optical wavelength control device, including an optical wavelength adjustment apparatus, and the optical wavelength measurement apparatus corresponding to any one of the possible implementations in the first aspect. The optical wavelength adjustment apparatus is configured to: obtain a measured value of a wavelength of to-be-measured light from the optical wavelength measurement apparatus; and control, based on a difference between the measured value and a target value, a light source device of the to-be-measured light to adjust a light emitting wavelength to the target value.

According to a fourth aspect, an embodiment of this application provides a light emitting system, including a light source device, and the optical wavelength control device described in the third aspect.

Optionally, the light source device is a laser. Optionally, the light emitting system may be a wavelength-locked laser.

### BRIEF DESCRIPTION OF DRAWINGS

FIG. 1 shows an example of a possible structure of an optical wavelength measurement apparatus according to an embodiment of this application;
FIG. 2 shows an example of a possible structure of a wavelength-locked laser according to an embodiment of this application;
FIG. 3 shows an example of another possible structure of an optical wavelength measurement apparatus according to an embodiment of this application;
FIG. 4-1 shows an example of a possible spectrum of an optical frequency comb according to an embodiment of this application;
FIG. 4-2 shows an example of a spectrum corresponding to each of a plurality of optical components according to an embodiment of this application;
FIG. 4-3 shows an example of a spectrum corresponding to each of a plurality of multiplexed optical signals according to an embodiment of this application;
FIG. 5, FIG. 6-1, and FIG. 6-2 each show an example of a possible structure of an optical wavelength measurement apparatus according to an embodiment of this application;
FIG. 7 shows an example of a possible procedure of an optical wavelength measurement method according to an embodiment of this application;
FIG. 8 shows an example of a possible structure of an optical wavelength control device and a light emitting system according to an embodiment of this application; and
FIG. 9 shows an example of another possible structure of a light emitting system according to an embodiment of this application.

### DESCRIPTION OF EMBODIMENTS

Embodiments of this application provide an optical wavelength measurement apparatus and method, an optical wavelength control device, and a light emitting system. Embodiments of this application are described below with reference to the accompanying drawings.

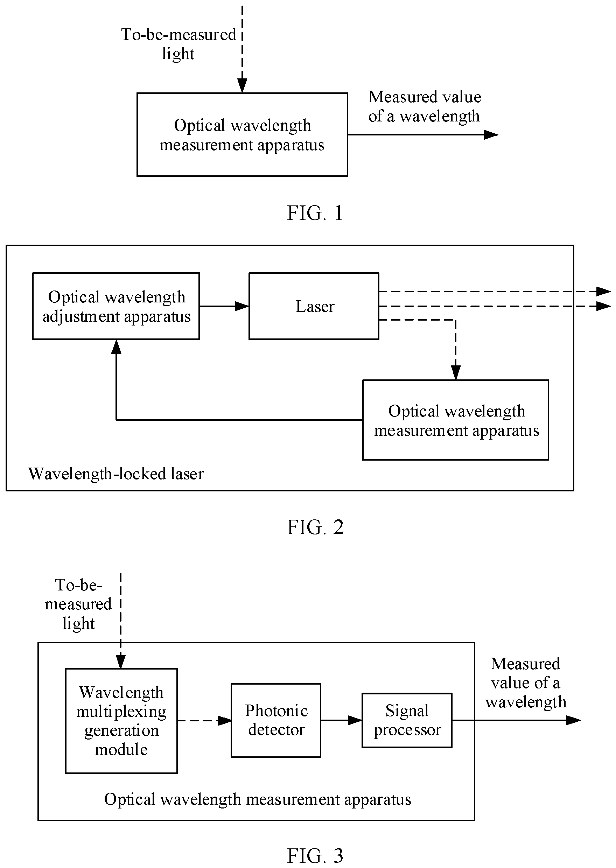

FIG. 1 shows a possible structure of an optical wavelength measurement apparatus. Refer to FIG. 1. After to-be-measured light is incident to the optical wavelength measurement apparatus, the optical wavelength measurement apparatus may measure a wavelength of the to-be-measured light, to obtain a measured value of the wavelength. A type of the to-be-measured light is not limited in embodiments of this application. The field of laser technologies is used as an example. The to-be-measured light may be, for example, laser.

Optionally, after obtaining the measured value of the wavelength, the optical wavelength measurement apparatus may output the measured value and/or another information related to the measured value. For example, the another information related to the measured value may include a difference between a target value of the wavelength of the to-be-measured light and the measured value. Optionally, the difference may include a difference between the measured value and the target value and/or a ratio of the measured value to the target value. The target value may be, for example, set by default or set by a user. For the to-be-measured light, if a wavelength of the to-be-measured light is determined, a frequency of the to-be-measured light may be determined. If a frequency of the to-be-measured light is determined, a wavelength of the to-be-measured light may be determined. Therefore, in embodiments of this application, if the optical wavelength measurement apparatus outputs the frequency of the to-be-measured light or information related to the frequency of the to-be-measured light, it may be considered that the information output by the optical wavelength measurement apparatus is related to the wavelength of the to-be-measured light.

An input and an output of the optical wavelength measurement apparatus may be specifically set based on an application scenario. FIG. 2 is a schematic diagram of a possible structure of a wavelength-locked laser. The wavelength-locked laser may include the optical wavelength measurement apparatus provided in embodiments of this application. Refer to FIG. 2. The wavelength-locked laser may include a laser, the optical wavelength measurement apparatus, and an optical wavelength adjustment apparatus. The laser is configured to generate laser, a part of the laser generated by the laser is incident to the optical wavelength measurement apparatus, and the optical wavelength measurement apparatus measures a wavelength of the incident light. The optical wavelength adjustment apparatus may obtain a measured value of the wavelength obtained by the optical wavelength measurement apparatus, calculate a difference between the measured value and a preset target value, and then send a control signal to the laser based on the difference. The control signal is used to control the laser to adjust a light emitting wavelength, to reduce a difference between the light emitting wavelength and the target value. The laser adjusts the light emitting wavelength under the control of the control signal, to help stabilize the light emitting wavelength at the target value. In embodiments of this application, how the laser adjusts the light emitting wavelength based on the control signal is not limited. Optionally, the laser may adjust a light emitting parameter (for example, temperature and/or an excitation current) based on the control signal, to adjust the light emitting wavelength.

The following describes a structure of an optical wavelength measurement apparatus according to an embodiment of this application.

FIG. 3 shows a possible structure of an optical wavelength measurement apparatus according to an embodiment of this application. Refer to FIG. 3. The optical wavelength measurement apparatus may include a wavelength multiplexing generation module, a photonic detector, and a signal processor.

### (1) About the wavelength multiplexing generation module

The wavelength multiplexing generation module is configured to respectively superimpose to-be-measured light with a plurality of optical components after receiving the to-be-measured light, to obtain a multiplexed optical signal corresponding to each of the plurality of optical components. The plurality of optical components include an optical component that is in an optical frequency comb and that corresponds to each of a plurality of comb frequency values of the optical frequency comb.

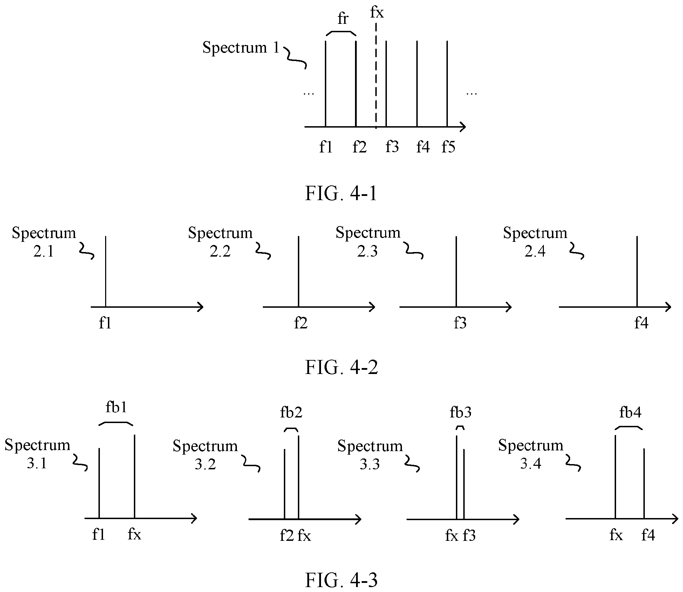

The optical frequency comb means a type of light whose spectrum is similar to a comb. Specifically, the spectrum includes a plurality of frequency values (also referred to as comb frequency values), and an interval between any two adjacent comb frequency values in the plurality of comb frequency values is a fixed frequency value. In embodiments of this application, the fixed frequency value may alternatively be referred to as a repetition frequency value of the optical frequency comb. A spectrum 1 in FIG. 4-1 schematically shows a spectrum of the optical frequency comb. Refer to the spectrum 1 in FIG. 3. The optical frequency comb may include an optical component corresponding to a comb frequency value f1, an optical component corresponding to a comb frequency value f2, an optical component corresponding to a comb frequency value f3, an optical component corresponding to a comb frequency value f4, and an optical component corresponding to a comb frequency value f5. An arrow in the spectrum 1 indicates that f1 to f5 gradually increase in a direction of the arrow. FIG. 3 shows only some comb frequency values in the optical frequency comb as an example. The optical frequency comb may include more or fewer comb frequency values. For example, the spectrum 1 of the optical frequency comb may further include one or more comb frequency values less than f1, and/or include one or more comb frequency values greater than f5, and/or include one or more comb frequency values between f1 and f5. f1 to f5 are any five different comb frequency values in the optical frequency comb.

It is assumed that the plurality of optical components include an optical component L1 corresponding to f1, an optical component L2 corresponding to f2, an optical component L3 corresponding to f3, and an optical component L4 corresponding to f4 in the optical frequency comb. In this case, the plurality of comb frequency values include f1, f2, f3, and f4. A spectrum 2.1 to a spectrum 2.4 in FIG. 4-2 respectively show spectrums of L1 to L4 as an example. In embodiments of this application, a quantity of optical components included in the plurality of optical components is not limited, and the plurality of optical components may include more or fewer optical components. In addition, in embodiments of this application, frequency values corresponding to any two of the plurality of optical components are not limited to be different, provided that there are at least two optical components with different frequency values in the plurality of optical components. For example, the plurality of optical components may alternatively include an optical component L5, and a comb frequency value corresponding to L5 is f1.

The spectrum 1 in FIG. 4-1 further shows a true value fx of a frequency of the to-be-measured light. An optical component corresponding to fx in the spectrum 1 is merely used as an example to represent a difference between fx and a comb frequency value of the optical frequency comb, instead of representing that the optical frequency comb includes the optical component corresponding to fx. After respectively superimposing the to-be-measured light with the plurality of optical components, the wavelength multiplexing generation module may obtain a multiplexed optical signal 1 obtained after L1 is superimposed with the to-be-measured light, a multiplexed optical signal 2 obtained after L2 is superimposed with the to-be-measured light, a multiplexed optical signal 3 obtained after L3 is superimposed with the to-be-measured light, and a multiplexed optical signal 4 obtained after L4 is superimposed with the to-be-measured light. A spectrum 3.1 to a spectrum 3.4 in FIG. 4-3 respectively show spectrums of the multiplexed optical signal 1 to the multiplexed optical signal 4 as an example. Refer to FIG. 4-3. A difference between f1 and fx is fb1, a difference between f2 and fx is fb2, a difference between f3 and fx is fb3, and a difference between f4 and fx is fb4.

### (2) About the photonic detector

A plurality of multiplexed optical signals obtained by the wavelength multiplexing generation module may be separately incident to the photonic detector, and the photonic detector is configured to convert the multiplexed optical signal corresponding to each of the plurality of optical components into an electrical signal. For ease of description, for any one (referred to as Li) of the plurality of optical components, in embodiments of this application, an electrical signal obtained after a multiplexed optical signal corresponding to Li is converted is referred to as an electrical signal corresponding to Li, where i is any positive integer less than or equal to 4.

Optionally, if a time-varying frequency fpi of an optical power of the multiplexed optical signal corresponding to Li is less than a cutoff frequency value of the photonic detector, a spectrum of the electrical signal corresponding to Li may reflect a frequency component corresponding to fpi. In other words, the electrical signal corresponding to L includes a signal corresponding to fpi. If a time-varying frequency fpi of an optical power of the multiplexed optical signal corresponding to Li is greater than a cutoff frequency value of the photonic detector, a spectrum of the electrical signal corresponding to Li cannot reflect a frequency component corresponding to fpi. In other words, the electrical signal corresponding to Li does not include a signal corresponding to fpi.

A comb frequency value fi corresponding to Li and a frequency value fx of the to-be-measured light are usually greater than the cutoff frequency value of the photonic detector. Therefore, a spectrum of an electrical signal corresponding to a multiplexed optical signal i (namely, a multiplexed optical signal obtained after Li is superposed with the to-be-measured light) corresponding to Li usually cannot reflect a frequency component corresponding to fx or fi.

When two inter-harmonics with a small frequency difference are superimposed, an amplitude of a superimposed waveform undergoes a periodic variation between strength and weakness over time. That is, beat effect is generated. A frequency at which the amplitude of the superimposed waveform changes is a difference between frequencies of the two inter-harmonics. A difference fbi between fi and fx is usually less than fi or fx. Therefore, even if the spectrum of the electrical signal corresponding to Li does not include a frequency component corresponding to fi or fx, but may include a frequency component corresponding to fbi. In embodiments of this application, the frequency component corresponding to fbi in the electrical signal corresponding to Li is referred to as a beat frequency signal.

Refer to FIG. 4-1. It is assumed that an interval between any two adjacent comb frequency values in f1 to f4 is fr, and the cutoff frequency value of the photonic detector is fr. In this case, because both fb2 and fb3 are less than fr, an electrical signal corresponding to L2 and an electrical signal corresponding to L3 respectively include a beat frequency signal corresponding to fb2 and a beat frequency signal corresponding to fb3. Because both fb1 and fb4 are greater than fr, neither the electrical signal corresponding to L1 nor the electrical signal corresponding to L4 includes a beat frequency signal.

### (3) About the signal processor

The photonic detector may be connected to the signal processor, and electrical signals that are obtained by the photonic detector and that correspond to the plurality of optical components may be separately input to the signal processor. The signal processor is configured to: obtain the electrical signal obtained by the photonic detector; and determine a measured value of a wavelength of the to-be-measured light based on a target electrical signal corresponding to a target optical component in the plurality of optical components and a target comb frequency value corresponding to the target optical component, where the target electrical signal includes a beat frequency signal. For example, after the photonic detector converts an obtained multiplexed optical signal corresponding to Li into an electrical signal (namely, an electrical signal corresponding to Li), the signal processor may obtain the electrical signal corresponding to Li, and determine whether the electrical signal includes a beat frequency signal.

In embodiments of this application, how the signal processor determines whether an electrical signal includes a beat frequency signal is not limited. Optionally, the signal processor may perform Fourier transformation on an electrical signal, to obtain a spectrum of the electrical signal, and determine, based on the spectrum of the electrical signal, whether the electrical signal includes a beat frequency signal. Optionally, it is assumed that any one of the plurality of comb frequency values is greater than the cutoff frequency value of the photonic detector. In this case, if a spectrum of an electrical signal corresponding to fi includes a frequency component corresponding to a frequency value, it may be considered that the frequency component is a beat frequency signal in the electrical signal, and a frequency value corresponding to the frequency component is the difference fbi between fi and fx. For example, still refer to FIG. 4-1. It is assumed that an interval between any two adjacent comb frequency values in f1 to f4 is fr, the cutoff frequency value of the photonic detector is fr, and f1 is greater than the cutoff frequency value of the photonic detector. In this case, the signal processor may identify, from the electrical signal corresponding to L2, the beat frequency signal corresponding to fb2, and identify, from the electrical signal corresponding to L3, the beat frequency signal corresponding to fb3.

In embodiments of this application, the electrical signal that is identified by the signal processor and that includes the beat frequency signal is referred to as an electrical signal corresponding to an available optical component. If the signal processor identifies electrical signals corresponding to a plurality of available optical components, the signal processor may use one or more electrical signals in the plurality of available optical components as the target electrical signal. Still refer to FIG. 4-1. It is assumed that the electrical signals that are identified by the signal processor and that correspond to the available optical components include the electrical signal corresponding to L2 and the electrical signal corresponding to L3. In this case, the signal processor may determine a measured value of a frequency of the to-be-measured light based on the electrical signal corresponding to L2 and the comb frequency value f2 corresponding to L2, for example, fx = f2 + fb2; or determine a measured value of a frequency of the to-be-measured light based on the electrical signal corresponding to L3 and the comb frequency value f3 corresponding to L3, for example, fx = f3 - fb3; or determine a measured value of a frequency of the to-be-measured light based on the electrical signal corresponding to L2, the electrical signal corresponding to L3, the comb frequency value f2 corresponding to L2, and the comb frequency value f3 corresponding to L3, for example, fx = ((f2 + fb2) + (f3 - fb3))/2.

According to the optical wavelength measurement apparatus provided in embodiments of this application, the optical component that is in the optical frequency comb and that corresponds to each of the plurality of comb frequency values is respectively superimposed with the to-be-measured light, and a frequency value of the beat frequency signal in the multiplexed optical signal is detected to measure the wavelength of the to-be-measured light, so that a problem of detecting the wavelength of the to-be-measured light can be changed into a problem of detecting the beat frequency signal. Usually, the frequency value of the beat frequency signal is relatively small. For example, a frequency interval between the to-be-measured light and a comb that is closest to the to-be-measured light and that is in the optical frequency comb is less than a repetition frequency value of the optical frequency comb. In this case, even if the frequency value of the to-be-measured light is greater than the cutoff frequency value of the photonic detector, the signal processor may detect the frequency value of the beat frequency signal to obtain the frequency value of the to-be-measured light. This helps expand an optical wavelength range that can be detected by the optical wavelength measurement apparatus, and helps implement that optical wavelength measurement is widely applied to the field of optical technologies and other technical fields combined with the optical technologies.

In addition, each multiplexed optical signal received by the photonic detector is a multiplexed optical signal of an optical component corresponding to a single comb frequency value and the to-be-measured light. Therefore, after identifying a beat frequency signal in the electrical signal, the signal processor may determine the measured value of the wavelength of the to-be-measured light based on the comb frequency value of the optical component corresponding to the electrical signal and the frequency value of the beat frequency signal, which helps simplify a calculation process.

In embodiments corresponding to FIG. 3, the wavelength multiplexing generation module is configured to respectively superimpose the to-be-measured light with the plurality of optical components, and the photonic detector is configured to respectively convert multiplexed optical signals corresponding to the plurality of optical components into electrical signals. An implementation of "respectively" is not limited in embodiments of this application.

Optionally, the wavelength multiplexing generation module may respectively perform superposition operations through a plurality of optical paths, and the photonic detector may respectively perform optical-to-electrical conversion by using a plurality of optical detection units.

Optionally, the wavelength multiplexing generation module may respectively perform superposition operations at a plurality of moments. For example, the wavelength multiplexing generation module is configured to sequentially superimpose the to-be-measured light with optical components in an optical component sequence. The optical component sequence includes the plurality of optical components arranged in a target order. For example, based on a time sequence, the wavelength multiplexing generation module first superimposes the to-be-measured light with L1 to obtain the multiplexed optical signal 1, then superimposes the to-be-measured light with L2 to obtain the multiplexed optical signal 2, then superimposes the to-be-measured light with L3 to obtain the multiplexed optical signal 3, and then superimposes the to-be-measured light with L4 to obtain the multiplexed optical signal 4. Correspondingly, the photonic detector may first receive the multiplexed optical signal 1, perform optical-to-electrical conversion on the multiplexed optical signal 1, then receive the multiplexed optical signal 2, perform optical-to-electrical conversion on the multiplexed optical signal 2, and so on. Based on the time sequence, the electrical signal corresponding to L1, the electrical signal corresponding to L2, the electrical signal corresponding to L3, and the electrical signal corresponding to L4 are sequentially obtained. In this way, a quantity of optical paths in the optical wavelength measurement apparatus is reduced, thereby reducing costs and a volume of the measurement apparatus.

Optionally, the target order may be an ascending order (referred to as a first order) of corresponding comb frequency values. A comb frequency value corresponding to a first available optical component in the optical component sequence is less than the frequency value of the to-be-measured light. Correspondingly, the first available optical component may be used as the target optical component. In this case, fx = a comb frequency value corresponding to the target optical component + a frequency value of a beat frequency signal in a target optical signal. For example, with reference to FIG. 4-1, optical components in the optical component sequence are sequentially L1, L2, L3, and L4. It is assumed that electrical signals corresponding to L2 and L3 include a beat frequency signal. In this case, L2 and L3 are referred to as available optical components. If the optical component sequence is arranged in the first order, the comb frequency value (namely, f2) corresponding to the first available optical component (namely, L2) in the optical component sequence is less than the frequency value (namely, fx) of the to-be-measured light, and fx = f2 + fb2.

Optionally, the target order may be a descending order (referred to as a second order) of corresponding comb frequency values. A comb frequency value corresponding to a first available optical component in the optical component sequence is greater than the frequency value of the to-be-measured light. Correspondingly, the first available optical component may be used as the target optical component. In this case, fx = a comb frequency value corresponding to the target optical component - a frequency value of a beat frequency signal in a target optical signal. For example, with reference to FIG. 4-1, optical components in the optical component sequence are sequentially L1, L2, L3, and L4. It is assumed that electrical signals corresponding to L2 and L3 include a beat frequency signal. In this case, L2 and L3 are referred to as available optical components. If the optical component sequence is arranged in the second order, the comb frequency value (namely, f3) corresponding to the first available optical component (namely, L3) in the optical component sequence is greater than the frequency value (namely, fx) of the to-be-measured light, and fx = f3 - fb3.

It can be learned that, if the optical component sequence is arranged in the first order or the second order, the first available optical component is used as the target optical component. This helps accurately determine a difference between the frequency value of the to-be-measured light and the comb frequency value corresponding to the target optical component, thereby improving accuracy of a measurement result of the to-be-measured light.

Optionally, after receiving the to-be-measured light and the optical components, the wavelength multiplexing generation module may separately adjust polarization states of the to-be-measured light and the optical components, so that the polarization state of the to-be-measured light is consistent with the polarization state of the optical components. Then, the wavelength multiplexing generation module respectively superimposes the adjusted to-be-measured light with the adjusted optical components. This helps generate a stable beat effect in the multiplexed optical signal obtained through superposition, and detect a beat frequency signal from an electrical signal of the multiplexed optical signal. Optionally, the wavelength multiplexing generation module is configured to adjust the optical components to linearly polarized light in a first polarization direction and adjust the to-be-measured light to linearly polarized light in a second polarization direction, where the first polarization direction is not perpendicular to the second polarization direction.

The foregoing describes a possible structure and functions of the optical wavelength measurement apparatus by using embodiments corresponding to FIG. 3. The following further describes a specific structure and functions of the measurement apparatus based on embodiments corresponding to FIG. 3. It should be noted that a specific structure used by the optical wavelength measurement apparatus to implement the foregoing functions is not limited in embodiments of this application.

First, the wavelength multiplexing generation module in embodiments corresponding to FIG. 3 is used as an example for description.

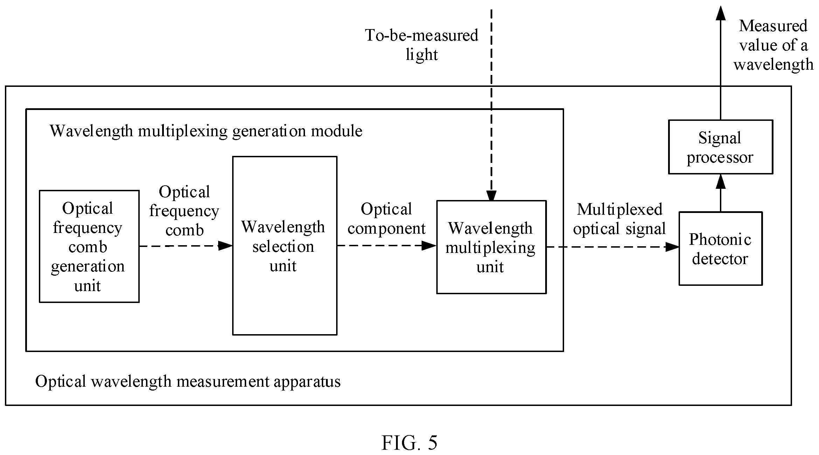

Refer to FIG. 5. The wavelength multiplexing generation module may include an optical frequency comb generation unit, a wavelength selection unit, and a wavelength multiplexing unit. The optical frequency comb generation unit is configured to generate the optical frequency comb. The wavelength selection unit is configured to output the optical component sequence based on the optical frequency comb. The wavelength multiplexing unit is configured to superimpose optical components output by the wavelength selection unit with the to-be-measured light, to obtain a multiplexed optical signal corresponding to a corresponding optical component.

The following separately describes the units in the wavelength multiplexing generation module and connection relationships between the units.

### (1.1) About the optical frequency comb generation unit

The optical frequency comb generation unit is configured to generate the optical frequency comb. In an example, the optical frequency comb generated by the optical frequency comb generation unit may be, for example, the spectrum 1 shown in FIG. 4-1. A specific device used by the optical frequency comb generation unit is not limited in embodiments of this application. Optionally, the optical frequency comb generation unit may include a laser, and the laser may be, for example, a wavelength-locked laser.

### (1.2) About a position relationship between the optical frequency comb generation unit and the wavelength selection unit

In the optical wavelength measurement apparatus, positions of the optical frequency comb generation unit and the wavelength selection unit may be set as follows: The optical frequency comb emitted by the optical frequency comb generation unit can be incident to an optical receiver of the wavelength selection unit. In embodiments of this application, the optical receiver of the wavelength selection unit is not limited to be located in an emission direction of the optical frequency comb generation unit. Optionally, an optical path adjustment unit (referred to as a first optical path adjustment unit) may be disposed in the optical wavelength measurement apparatus. The first optical path adjustment unit is configured to guide the optical frequency comb emitted by the optical frequency comb generation unit to the optical receiver of the wavelength selection unit. For example, the first optical path adjustment unit may include an optical reflection element and/or a refraction element.

### (1.3) About the wavelength selection unit

The wavelength selection unit is configured to receive the optical frequency comb generated by the optical frequency comb generation unit, and separately output the plurality of optical components corresponding to the plurality of comb frequency values of the optical frequency comb. Each of the plurality of optical components corresponds to one of the plurality of comb frequency values.

For ease of understanding, it is assumed that the plurality of optical components include L1 to L4. Refer to the spectrum 2.1 to the spectrum 2.4 in FIG. 4-2. The comb frequency values corresponding to L1, L2, L3, and L4 are f1, f2, f3, and f4 respectively. In embodiments of this application, a quantity of optical components included in the plurality of optical components is not limited, and the plurality of optical components may include more or fewer optical components. In addition, in embodiments of this application, frequency values corresponding to any two of the plurality of optical components are not limited to be different, provided that there are at least two optical components with different frequency values in the plurality of optical components. For example, the plurality of optical components may alternatively include an optical component L5, and a comb frequency value corresponding to L5 is f1.

The following describes possible implementations of "separately" in which the wavelength selection unit separately outputs the plurality of optical components.

Implementation 1: "Separately" is implemented by using a plurality of optical output ends of the wavelength selection unit.

Specifically, the plurality of optical output ends may be disposed in the wavelength selection unit. After receiving the optical frequency comb, the wavelength selection unit may separately extract the optical components corresponding to the plurality of comb frequency values in the optical frequency comb, and output the plurality of optical components by using the plurality of optical output ends. Each optical output end is configured to output one optical component. For example, the wavelength selection unit outputs L1 by using an optical output end 1, outputs L2 by using an optical output end 2, outputs L3 by using an optical output end 3, and outputs L4 by using an optical output end 4.

Implementation 2: "Separately" is implemented at a plurality of moments.

Specifically, the wavelength selection unit may separately output the plurality of optical components at the plurality of moments by using one optical output end, that is, output the optical component sequence. For example, L1 is output by using the optical output end 1 at a moment 1, then L2 is output by using the optical output end 1 at a moment 2, then L3 is output by using the optical output end 3 at a moment 3, and then L4 is output by using the optical output end 1 at a moment 4.

Implementation 3: "Separately" is implemented by using a plurality of optical output ends and at a plurality of moments.

With reference to the content of Implementation 1 and Implementation 2, in Implementation 3, the wavelength selection unit may output the plurality of optical components at the plurality of moments by using the plurality of optical output ends. For example, at the moment 1, the wavelength selection unit outputs L1 by using the optical output end 1, and outputs L2 by using the optical output end 2. Then, at the moment 2, the wavelength selection unit outputs L3 by using the optical output end 1, and outputs L4 by using the optical output end 2.

For different test tasks, the plurality of optical components output by the wavelength selection unit may be the same or different. Optionally, the plurality of optical components may be determined based on a test task. For example, a range and an interval of frequency values corresponding to an optical component in the plurality of optical components may be determined based on an estimated wavelength range, required test precision, and the like of the to-be-measured light.

The foregoing describes functions of the wavelength selection unit. A specific structure used by the wavelength selection unit to implement the functions is not limited in embodiments of this application.

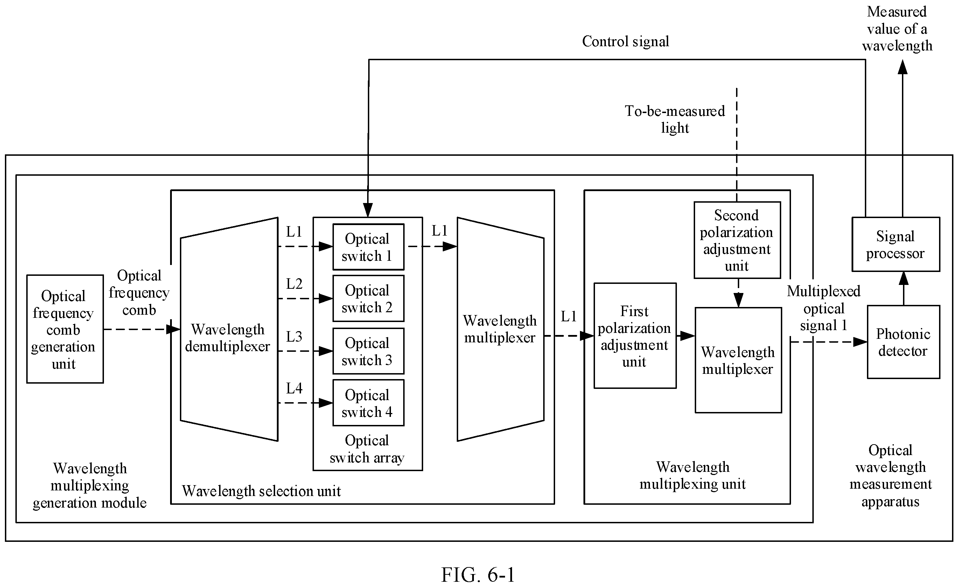

In an example, FIG. 6-1 shows an example of another possible structure of an optical wavelength measurement apparatus according to an embodiment of this application. Refer to FIG. 6-1. Optionally, the wavelength selection unit may include a wavelength division demultiplexer, an optical switch array, and a wavelength division multiplexer.

The wavelength division demultiplexer is configured to separate an optical component of each comb frequency value in the plurality of comb frequency values from the optical frequency comb. A plurality of separated optical components are respectively incident to a plurality of optical switches in the optical switch array. Each of the plurality of optical switches corresponds to one of the plurality of optical components. Still refer to FIG. 6-1. It is assumed that the wavelength division demultiplexer may separate L1 to L4 from the optical frequency comb, where L1 to L4 are respectively incident to an optical switch 1 to an optical switch 4 in the optical switch array.

The optical switch array is configured to sequentially turn on, under the control of a control signal, optical switches corresponding to each of the plurality of optical components in the target order. That is, if L1 precedes L2 in the target order, the optical switch array first turns on an optical switch corresponding to L1, and then turns on an optical switch corresponding to L2. A specific form of the target order is not limited in embodiments of this application. It is assumed that the target order is the first order. With reference to FIG. 6-1, the optical switch array first turns on the optical switch 1, and turns off the optical switch 2 to the optical switch 4. Correspondingly, L1 can be incident to the wavelength multiplexer through an optical path of the optical switch 1, and L2 and L3 cannot be incident to the wavelength multiplexer. Then, the optical switch 2 is turned on, and the optical switch 1, the optical switch 3, and the optical switch 4 are turned off. Correspondingly, L2 can be incident to the wavelength multiplexer through an optical path of the optical switch 2, and L1, L3, and L4 cannot be incident to the wavelength multiplexer. Then, the optical switch 3 is turned on, and the optical switch 1, the optical switch 2, and the optical switch 4 are turned off. Correspondingly, L3 can be incident to the wavelength multiplexer through an optical path of the optical switch 3, and L1, L2, and L4 cannot be incident to the wavelength multiplexer. Then, the optical switch 4 is turned on, and the optical switch 1, the optical switch 2, and the optical switch 3 are turned off. Correspondingly, L4 can be incident to the wavelength multiplexer through an optical path of the optical switch 4, and L1, L2, and L3 cannot be incident to the wavelength multiplexer. In other words, the optical switch array sequentially outputs L1, L2, L3, and L4, that is, sequentially outputs the plurality of optical components in the first order.

A source of a control signal received by the optical switch array is not limited in embodiments of this application. In an example, optionally, the control signal may be from the wavelength selection unit, or, for example, as shown in FIG. 6-1, may be from a signal collection and processing module, or may be from another module in the wavelength selection unit, or may be from another apparatus outside the wavelength selection unit.

The wavelength division multiplexer is configured to combine output optical paths of each of the plurality of optical switches into one path (referred to as a target optical path), or combine propagation paths of optical components output by each of the plurality of optical switches into a target path, to output the optical component sequence through the target optical path. Still refer to FIG. 6-1. After L1 is incident to the wavelength multiplexer, the wavelength multiplexer may adjust an optical path of L1, so that L1 is incident to the wavelength multiplexing unit. Optionally, the wavelength multiplexer may include one or more optical path adjustment elements. The optical path adjustment element may include, for example, an optical reflection element or an optical refraction element.

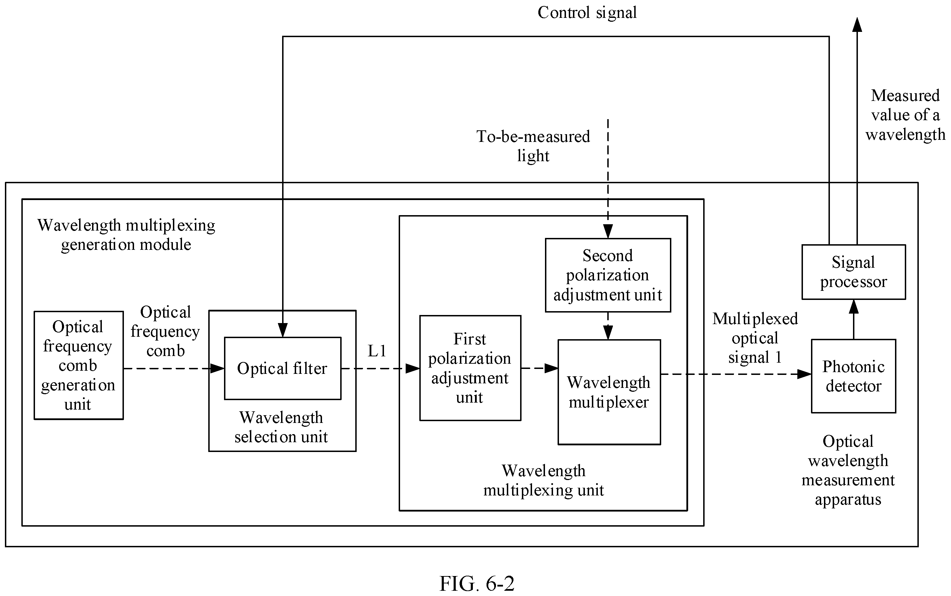

In an example, FIG. 6-2 shows an example of another possible structure of an optical wavelength measurement apparatus according to an embodiment of this application. Refer to FIG. 6-2. Optionally, the wavelength selection unit may include an optical filter. The optical filter is configured to, under the control of the control signal, sequentially separate each of the plurality of optical components from the optical frequency comb in the target order. A specific form of the target order is not limited in embodiments of this application. Optionally, the target order is the first order or the second order. The first order is an ascending order of corresponding comb frequency values. The second order is a descending order of corresponding comb frequency values.

Refer to FIG. 6-2. It is assumed that at the moment 1, the optical filter separates L1 from the received optical frequency comb. Then, the optical filter separates L2 from the received optical frequency comb. Then, the optical filter separates L3 from the received optical frequency comb. Then, the optical filter separates L4 from the received optical frequency comb. In other words, the optical filter sequentially outputs L1, L2, L3, and L4 under the control of the control signal, that is, sequentially outputs the plurality of optical components in the first order.

A source of a control signal received by the optical filter is not limited in embodiments of this application. In an example, optionally, the control signal may be from the wavelength selection unit, or, for example, as shown in FIG. 6-2, may be from a signal processor, or may be from another module in the wavelength selection unit, or may be from another apparatus outside the wavelength selection unit.

### (1.4) About a position relationship between the wavelength selection unit and the wavelength multiplexing unit

In the optical wavelength measurement apparatus, positions of the wavelength selection unit and the wavelength multiplexing unit may be set as follows: The optical component sequence output by the wavelength selection unit can be sequentially incident to an optical receiver of the wavelength multiplexing unit. Similar to the content in (1.2), in embodiments of this application, the optical receiver of the wavelength multiplexing unit is not limited to be located in an emission direction of the wavelength selection unit. Optionally, a second optical path adjustment unit may be disposed in the optical wavelength measurement apparatus. The second optical path adjustment unit is configured to sequentially guide the optical component sequence emitted by the wavelength selection unit to the optical receiver of the wavelength multiplexing unit. For example, the second optical path adjustment unit may include an optical reflection element and/or a refraction element.

### (1.5) About the wavelength multiplexing unit

The wavelength multiplexing unit is configured to receive the to-be-measured light and the optical components in the plurality of optical components, and respectively superimpose the to-be-measured light with each of the plurality of optical components, to output the multiplexed optical signal corresponding to the corresponding optical component. For example, the wavelength multiplexing unit may superimpose L1 with the to-be-measured light to output a multiplexed optical signal 1, superimpose L2 with the to-be-measured light to output a multiplexed optical signal 2, superimpose L3 with the to-be-measured light to output a multiplexed optical signal 3, and superimpose L4 with the to-be-measured light to output a multiplexed optical signal 4. The spectrum 3.1 to the spectrum 3.4 in FIG. 4-3 respectively show spectrums of the multiplexed optical signal 1 to the multiplexed optical signal 4 as an example.

Optionally, with reference to several implementations of "separately" described in Implementation 1 to Implementation 3 above, the wavelength multiplexing unit may obtain a multiplexed optical signal corresponding to each of the plurality of optical components in a corresponding manner. For example, it is assumed that the wavelength selection unit separately outputs L1 to L4 in the manner described in Implementation 1. In this case, optionally, the wavelength multiplexing unit may superimpose L1 with the to-be-measured light by using a wavelength multiplexer 1 to output the multiplexed optical signal 1, superimpose L2 with the to-be-measured light by using a wavelength multiplexer 2 to output the multiplexed optical signal 2, superimpose L3 with the to-be-measured light by using a wavelength multiplexer 3 to output the multiplexed optical signal 3, and superimpose L4 with the to-be-measured light by using a wavelength multiplexer 4 to output the multiplexed optical signal 4. For example, it is assumed that the wavelength selection unit separately outputs L1 to L4 in the manner described in Implementation 2. In this case, optionally, the wavelength multiplexing unit may superimpose L1 with the to-be-measured light at the moment 1 to output the multiplexed optical signal 1, then superimpose L2 with the to-be-measured light at the moment 2 to output the multiplexed optical signal 2, then superimpose L3 with the to-be-measured light at the moment 3 to output the multiplexed optical signal 3, and then superimpose L4 with the to-be-measured light at the moment 4 to output the multiplexed optical signal 4.

The foregoing describes functions of the wavelength multiplexing unit. A specific structure used by the wavelength multiplexing unit to implement the functions is not limited in embodiments of this application. In an example, still refer to FIG. 6-1 or FIG. 6-2. Optionally, the wavelength multiplexing unit may include a first polarization adjuster, a second polarization adjuster, and a wavelength multiplexer.

The first polarization adjuster may be configured to adjust a polarization state of the optical components output by the wavelength selection unit, and the second polarization adjuster may be configured to adjust a polarization state of the to-be-measured light, so that the polarization state of the to-be-measured light is consistent with the polarization state of the optical components output by the wavelength selection unit. This helps generate a stable beat effect in a multiplexed optical signal output by the wavelength multiplexing unit, and detect a beat frequency signal in the multiplexed optical signal. Optionally, the first polarization adjuster is configured to adjust each of the plurality of optical components to the linearly polarized light in the first polarization direction. The second polarization adjuster is configured to adjust the to-be-measured light to the linearly polarized light in the second polarization direction. The first polarization direction is not perpendicular to the second polarization direction.

The wavelength multiplexer is configured to superimpose each optical component adjusted by the first polarization adjuster with the to-be-measured light adjusted by the second polarization adjuster, to obtain a multiplexed optical signal corresponding to each optical component. Optionally, the wavelength multiplexer may include one or more optical path adjustment elements. The optical path adjustment element may include, for example, an optical reflection element or an optical refraction element.

Refer to FIG. 6-1 or FIG. 6-2. The wavelength multiplexer may receive L1 adjusted by the first polarization adjuster and the to-be-measured light adjusted by the second polarization unit, and superimpose L1 with the to-be-measured light to output the multiplexed optical signal 1. Then, the wavelength multiplexer may receive L2 adjusted by the first polarization adjuster and the to-be-measured light adjusted by the second polarization unit, and superimpose L2 with the to-be-measured light to output the multiplexed optical signal 2. Then, the wavelength multiplexer may receive L3 adjusted by the first polarization adjuster and the to-be-measured light adjusted by the second polarization unit, and superimpose L3 with the to-be-measured light to output the multiplexed optical signal 3. Then, the wavelength multiplexer may receive L4 adjusted by the first polarization adjuster and the to-be-measured light adjusted by the second polarization unit, and superimpose L4 with the to-be-measured light to output the multiplexed optical signal 4. That is, if the wavelength selection unit sequentially outputs L1, L2, L3, and L4, the wavelength multiplexing unit may sequentially output the multiplexed optical signal 1, the multiplexed optical signal 2, the multiplexed optical signal 3, and the multiplexed optical signal 4. In other words, if the wavelength selection unit sequentially outputs the plurality of optical components in the target order, the wavelength multiplexing unit may sequentially output the multiplexed optical signals corresponding to the plurality of optical components in the target order.

### (1.6) About a position relationship between the wavelength multiplexing unit and the photonic detector

In the optical wavelength measurement apparatus, positions of the wavelength multiplexing unit and the photonic detector may be set as follows: A wavelength multiplexing sequence output by the wavelength multiplexing unit can be sequentially incident to an optical receiver of the photonic detector. Similar to the content in (1.2) or (1.4), in embodiments of this application, the optical receiver of the photonic detector is not limited to be located in an emission direction of the wavelength multiplexing unit. Optionally, a third optical path adjustment unit may be disposed in the optical wavelength measurement apparatus. The third optical path adjustment unit is configured to sequentially guide the wavelength multiplexing sequence emitted by the wavelength multiplexing unit to the optical receiver of the photonic detector. For example, the third optical path adjustment unit may include an optical reflection element and/or a refraction element.

(2.1) A device type of the photonic detector is not limited in embodiments of this application. For example, the photonic detector may be a photodiode, for example, may be an avalanche photodiode.

With reference to several implementations of "separately" described in Implementation 1 to Implementation 3 above, the photonic detector may obtain a signal of an optical power of each of the plurality of multiplexed optical signals in a corresponding manner. For example, it is assumed that the wavelength selection unit separately outputs L1 to L4 in the manner described in Implementation 3. In this case, the wavelength multiplexing unit superimposes L1 with the to-be-measured light by using the wavelength multiplexer 1 to output the multiplexed optical signal 1, superimposes L2 with the to-be-measured light by using the wavelength multiplexer 2 to output the multiplexed optical signal 2, superimposes L3 with the to-be-measured light by using the wavelength multiplexer 3 to output the multiplexed optical signal 3, and superimposes L4 with the to-be-measured light by using the wavelength multiplexer 4 to output the multiplexed optical signal 4. Then, the photonic detector may detect a signal of an optical power of the multiplexed optical signal 1 by using a photonic detection unit 1, detect a signal of an optical power of the multiplexed optical signal 2 by using a photonic detection unit 2, detect a signal of an optical power of the multiplexed optical signal 3 by using a photonic detection unit 3, and detect a signal of an optical power of the multiplexed optical signal 4 by using a photonic detection unit 4. For example, it is assumed that the wavelength selection unit separately outputs L1 to L4 in the manner described in Implementation 2. In this case, the wavelength multiplexing unit sequentially outputs the multiplexed optical signal 1, the multiplexed optical signal 2, the multiplexed optical signal 3, and the multiplexed optical signal 4 based on the time sequence. Then, the photonic detector may sequentially receive the multiplexed optical signal 1, the multiplexed optical signal 2, the multiplexed optical signal 3, and the multiplexed optical signal 4 based on the time sequence, and sequentially detect the signal of the optical power of the multiplexed optical signal 1, the signal of the optical power of the multiplexed optical signal 2, the signal of the optical power of the multiplexed optical signal 3, and the signal of the optical power of the multiplexed optical signal 4 based on the time sequence.

(3.1) As described in embodiments corresponding to FIG. 3, the signal processor is configured to obtain the electrical signal output by the photonic detector, and determine the measured value of the wavelength of the to-be-measured light based on the target electrical signal. In a possible implementation, the signal processor is configured to generate a control signal. Optionally, with reference to FIG. 6-1 or FIG. 6-2, the signal processor may be connected to the wavelength selection unit, to input the control signal to the wavelength selection unit. The control signal is used to control the wavelength selection unit to output the plurality of optical components. Optionally, the control signal may be used to control the wavelength selection unit to sequentially output the plurality of optical components in the target order. Still refer to FIG. 6-1. The signal processor may be configured to send the control signal to the optical switch array, to control the optical switch array to sequentially turn on optical switches corresponding to each of the plurality of optical components in the target order, for example, sequentially turn on the optical switch 1, the optical switch 2, the optical switch 3, and the optical switch 4 based on time sequence, and turn off other optical switches while turning on any one optical switch.

To reduce measurement resources of the optical wavelength measurement apparatus, after identifying the required multiplexed optical signals for measurement, the signal processor may control the wavelength selection unit to no longer output an optical component. That the target order is the first order or the second order described above is used as an example. The signal processor may determine the wavelength of the to-be-measured light based on information about a first target multiplexed optical signal. Therefore, to reduce measurement resources of the optical wavelength measurement apparatus, after identifying the first target multiplexed optical signal, the signal processor controls the wavelength selection unit to no longer output an optical component. In other words, the plurality of multiplexed optical signals output by the wavelength selection unit include only one target multiplexed optical signal, and the target multiplexed optical signal is a last multiplexed optical signal that is output by the wavelength selection unit and that is in the plurality of multiplexed optical signals.

Optionally, to reduce energy consumption of the optical wavelength measurement apparatus, the signal processor may be connected to the optical frequency comb generation unit, to control the optical frequency comb generation unit to generate or stop generating an optical frequency comb. Optionally, after the signal processor identifies the required multiplexed optical signals for measurement, the signal processor may control the optical frequency comb generation unit to stop outputting an optical frequency comb.

After obtaining a measured value of the wavelength, the signal processor may output the measured value and/or another information related to the measured value. For example, the another information related to the measured value may include a difference between a target value of the wavelength of the to-be-measured light and the measured value. Optionally, the difference may include a difference between the measured value and the target value and/or a ratio of the measured value to the target value. The target value may be, for example, set by default or set by a user.

For the to-be-measured light, if a wavelength of the to-be-measured light is determined, a frequency of the to-be-measured light may be determined. If a frequency of the to-be-measured light is determined, a wavelength of the to-be-measured light may be determined. Therefore, in embodiments of this application, if the signal processor outputs information related to the frequency of the to-be-measured light, it may also be considered that the output information is related to the wavelength of the to-be-measured light.

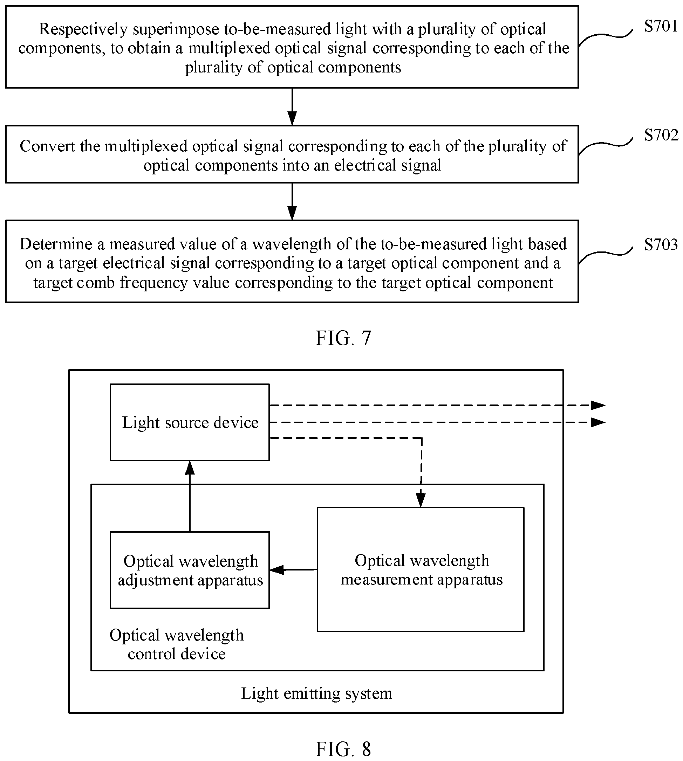

Based on a same inventive concept, an embodiment of this application further provides an optical wavelength measurement method. Refer to FIG. 7. The method may include the following step S701 to step S703.

S701: Respectively superimpose to-be-measured light with a plurality of optical components, to obtain a multiplexed optical signal corresponding to each of the plurality of optical components.

The plurality of optical components include an optical component that is in an optical frequency comb and that corresponds to each of a plurality of comb frequency values of the optical frequency comb.

S702: Convert the multiplexed optical signal corresponding to each of the plurality of optical components into an electrical signal.

S703: Determine a measured value of a wavelength of the to-be-measured light based on a target electrical signal corresponding to a target optical component and a target comb frequency value corresponding to the target optical component.

The plurality of optical components include the target optical component, and the target electrical signal includes a beat frequency signal.

According to the optical wavelength measurement method provided in embodiments of this application, the optical component that is in the optical frequency comb and that corresponds to each of the plurality of comb frequency values is respectively superimposed with the to-be-measured light, and a frequency value of the beat frequency signal in the multiplexed optical signal is detected to measure the wavelength of the to-be-measured light, so that a problem of detecting the wavelength of the to-be-measured light can be changed into a problem of detecting the beat frequency signal. Usually, the frequency value of the beat frequency signal is relatively small. For example, a frequency interval between the to-be-measured light and a comb that is closest to the to-be-measured light and that is in the optical frequency comb is less than a repetition frequency value of the optical frequency comb. In this case, even if a frequency value of the to-be-measured light is greater than a cutoff frequency value of a photonic detector, the frequency value of the beat frequency signal may be detected to obtain the frequency value of the to-be-measured light. This helps expand an optical wavelength range that can be detected by using the optical wavelength measurement method, and helps implement that optical wavelength measurement is widely applied to the field of optical technologies and other technical fields combined with the optical technologies.

In addition, each multiplexed optical signal corresponding to the electrical signal is a multiplexed optical signal of an optical component corresponding to a single comb frequency value and the to-be-measured light. Therefore, after a beat frequency signal in the electrical signal is identified, the measured value of the wavelength of the to-be-measured light may be determined based on the comb frequency value of the optical component corresponding to the electrical signal and the frequency value of the beat frequency signal, which helps simplify a calculation process.

Optionally, S701 may specifically include: sequentially superimposing the to-be-measured light with optical components in an optical component sequence. The optical component sequence includes the plurality of optical components arranged in a target order. In this way, a quantity of optical paths that need to be set for the optical wavelength measurement method is reduced, thereby helping reduce implementation costs and complexity of the measurement method.

Optionally, the target order is a first order or a second order, and the target optical component is a first available optical component in the optical component sequence. An electrical signal corresponding to the available optical component includes the beat frequency signal. The first order is an ascending order of corresponding comb frequency values. The second order is a descending order of corresponding comb frequency values. If the optical component sequence is arranged in the first order or the second order, the first available optical component is used as the target optical component. This helps accurately determine a difference between the frequency value of the to-be-measured light and the comb frequency value corresponding to the target optical component, thereby improving accuracy of a measurement result of the to-be-measured light.

Optionally, S701 may specifically include: adjusting the to-be-measured light to linearly polarized light in a first polarization direction, separately adjusting the plurality of optical components to linearly polarized light in a second polarization direction, and superimposing the adjusted to-be-measured light with each of the plurality of adjusted optical components. This helps generate a stable beat effect in the multiplexed optical signal obtained through superposition, and detect the beat frequency signal from the electrical signal of the multiplexed optical signal.

Optionally, the embodiment method corresponding to FIG. 7 may be considered as a procedure corresponding to a process in which the optical wavelength measurement apparatus corresponding to FIG. 3, FIG. 6-1, or FIG. 6-2 runs. For an implementation and technical effects that are not described in detail in embodiments corresponding to FIG. 7, refer to the related descriptions in embodiments corresponding to FIG. 3, FIG. 6-1, or FIG. 6-2.

The foregoing describes the optical wavelength measurement apparatus and method provided in embodiments of this application. An embodiment of this application further provides an optical wavelength control device.

Refer to FIG. 8. The optical wavelength control device provided in embodiments of this application may include an optical wavelength adjustment apparatus and an optical wavelength measurement apparatus. The optical wavelength measurement apparatus is configured to measure a wavelength of to-be-measured light, to obtain the wavelength of the to-be-measured light. Optionally, the optical wavelength measurement apparatus may be the measurement apparatus described in embodiments corresponding to FIG. 3, FIG. 6-1, or FIG. 6-2. The optical wavelength adjustment apparatus is configured to: obtain a measured value of the wavelength of the to-be-measured light from the optical wavelength measurement apparatus; and control, based on a difference between the measured value and a target value, a light source device of the to-be-measured light (that is, the to-be-measured light comes from the light source device) to adjust a light emitting wavelength to the target value.

Still refer to FIG. 8. An embodiment of this application further provides a light emitting system. The light emitting system may include a light source device and an optical wavelength control device. A part of light emitted by the light source device is incident to the optical wavelength control device. The optical wavelength control device includes an optical wavelength adjustment apparatus and an optical wavelength measurement apparatus. The optical wavelength measurement apparatus is configured to measure a wavelength of incident light (or referred to as to-be-measured light), to obtain the wavelength of the to-be-measured light. Optionally, the optical wavelength measurement apparatus may be the measurement apparatus described in embodiments corresponding to FIG. 3, FIG. 6-1, or FIG. 6-2. The optical wavelength adjustment apparatus is configured to: obtain a measured value of the wavelength of the to-be-measured light from the optical wavelength measurement apparatus; and send, based on a difference between the measured value and a target value, a control signal to the light source device that emits the to-be-measured light. The control signal is used to control the light source device to adjust a light emitting wavelength to the target value. The light source device is configured to adjust the light emitting wavelength based on the control signal after receiving the control signal, to reduce a difference between the light emitting wavelength and the target value, thereby helping stabilize the light emitting wavelength at the target value. Optionally, the light source device may be a laser. In a possible implementation, the light emitting system may be the wavelength-locked laser shown in FIG. 2.

Optionally, the light emitting system may include a plurality of groups of light emitting devices, and each group of light emitting devices includes both the light source device and the optical wavelength control device shown in FIG. 8. Optionally, the light emitting system may be an optical network transmitter.

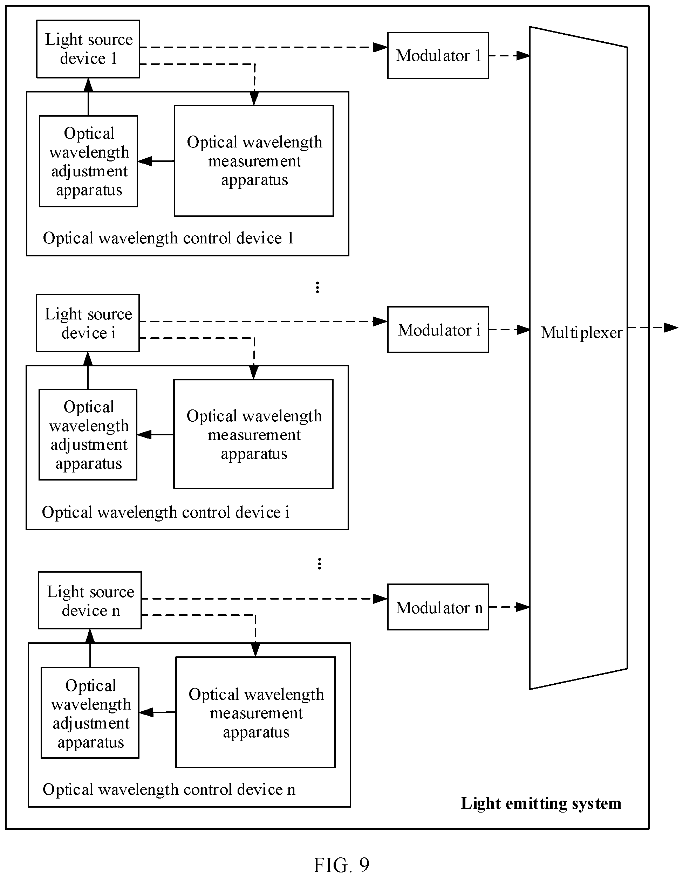

Refer to FIG. 9. The light emitting system may include a light source device 1 to a light source n, may further include an optical wavelength control device 1 to an optical wavelength control device n, may further include a modulator 1 to a modulator n, and may further include a multiplexer, where n is a positive integer. It is assumed that i is any positive integer less than or equal to n. The light source device i is configured to output an optical signal with a stable wavelength under the control of the optical wavelength control device i. For details, refer to embodiments corresponding to FIG. 8. The modulator i is configured to modulate the optical signal output by the light source device i, and the modulated optical signal is incident to the multiplexer. The multiplexer is configured to separately receive optical signals output by the modulator 1 to the modulator n, and multiplex a plurality of optical signals, to obtain a multiplexed optical signal of the plurality of optical signals. Optionally, the multiplexed optical signal output by the multiplexer may be incident to an optical transmission line (for example, an optical fiber). The light source device i can output an optical signal with a stable wavelength. Therefore, a wavelength jitter range of each optical signal in the multiplexed optical signal output by the multiplexer is relatively small, which helps increase a data transmission bandwidth without increasing interference between optical signals of adjacent wavelengths.

In embodiments of this application, a plurality of means two or more. This is not limited in this application. In embodiments of this application, "/" may represent an "or" relationship between associated objects. For example, A/B may represent A or B. "And/or" may be used to represent that there are three relationships between associated objects. For example, A and/or B may represent the following three cases: Only A exists, both A and B exist, and only B exists. A and B may be singular or plural. To facilitate description of the technical solutions in embodiments of this application, terms such as "first" and "second" may be used in embodiments of this application to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

Embodiments in the specification are all described in a progressive manner, same or similar parts between embodiments may be mutually referenced, and each embodiment focuses on a difference from other embodiments. Especially, a system embodiment is basically similar to a method embodiment, and therefore is described briefly. For related parts, refer to partial descriptions in method embodiments.

It is clear that a person skilled in the art can make various modifications and variations to the present invention without departing from the scope of the present invention. In this way, if these modifications and variations made to this application fall within the scope of the claims of the present invention, the present invention is intended to include these modifications and variations.

## Claims

1. An optical wavelength measurement apparatus, comprising:
a wavelength multiplexing generation module, configured to respectively superimpose to-be-measured light with a plurality of optical components, to obtain a multiplexed optical signal corresponding to each of the plurality of optical components, wherein the plurality of optical components comprise an optical component that is in an optical frequency comb and that corresponds to each of a plurality of comb frequency values of the optical frequency comb;
a photonic detector, configured to convert the multiplexed optical signal corresponding to each of the plurality of optical components into an electrical signal; and
a signal processor, configured to determine a measured value of a wavelength of the to-be-measured light based on a target electrical signal corresponding to a target optical component and a target comb frequency value corresponding to the target optical component, wherein the plurality of optical components comprise the target optical component, and the target electrical signal comprises a beat frequency signal.

2. The apparatus according to claim 1, wherein the wavelength multiplexing generation module is specifically configured to sequentially superimpose the to-be-measured light with optical components in an optical component sequence, wherein the optical component sequence comprises the plurality of optical components arranged in a target order.

3. The apparatus according to claim 2, wherein the target order is a first order or a second order, the target optical component is a first available optical component in the optical component sequence, an electrical signal corresponding to the available optical component comprises the beat frequency signal, the first order is an ascending order of corresponding comb frequency values, and the second order is a descending order of corresponding comb frequency values.

4. The apparatus according to claim 2 or 3, wherein the wavelength multiplexing generation module comprises an optical frequency comb generation unit, a wavelength selection unit, and a wavelength multiplexing unit, wherein
the optical frequency comb generation unit is configured to generate the optical frequency comb;
the wavelength selection unit is configured to output the optical component sequence based on the optical frequency comb; and
the wavelength multiplexing unit is configured to superimpose each optical component in the optical component sequence with the to-be-measured light, to obtain the multiplexed optical signal corresponding to each optical component.

5. The apparatus according to claim 4, wherein the wavelength selection unit comprises a wavelength division demultiplexer, an optical switch array, and a wavelength division multiplexer, wherein
the wavelength division demultiplexer is configured to separate the plurality of optical components from the optical frequency comb;
each of a plurality of optical switches in the optical switch array is configured to receive one of the plurality of optical components, and the optical switch array is configured to sequentially turn on optical switches corresponding to corresponding optical components in the target order to output the corresponding optical components; and
the wavelength division multiplexer is configured to combine propagation paths of the optical components output by each of the plurality of optical switches into a target path, to output the optical component sequence through the target optical path.

6. The apparatus according to claim 4, wherein the wavelength selection unit comprises an optical filter, wherein
the optical filter is configured to sequentially separate the corresponding optical components from the optical frequency comb in the target order, to output the optical component sequence.

7. The apparatus according to any one of claims 4 to 6, wherein the wavelength multiplexing unit comprises a first polarization adjuster, a second polarization adjuster, and a wavelength multiplexer, wherein
the first polarization adjuster is configured to adjust each optical component in the optical component sequence to linearly polarized light in a first polarization direction;
the second polarization adjuster is configured to adjust the to-be-measured light to linearly polarized light in a second polarization direction, wherein the first polarization direction is not perpendicular to the second polarization direction; and
the wavelength multiplexer is configured to superimpose each optical component adjusted by the first polarization adjuster with the to-be-measured light adjusted by the second polarization adjuster, to obtain a multiplexed optical signal corresponding to each optical component.

8. An optical wavelength measurement method, comprising:
respectively superimposing to-be-measured light with a plurality of optical components, to obtain a multiplexed optical signal corresponding to each of the plurality of optical components, wherein the plurality of optical components comprise an optical component that is in an optical frequency comb and that corresponds to each of a plurality of comb frequency values of the optical frequency comb;
converting the multiplexed optical signal corresponding to each of the plurality of optical components into an electrical signal; and
determining a measured value of a wavelength of the to-be-measured light based on a target electrical signal corresponding to a target optical component and a target comb frequency value corresponding to the target optical component, wherein the plurality of optical components comprise the target optical component, and the target electrical signal comprises a beat frequency signal.

9. The method according to claim 8, wherein the respectively superimposing to-be-measured light with a plurality of optical components comprises:
sequentially superimposing the to-be-measured light with optical components in an optical component sequence, wherein the optical component sequence comprises the plurality of optical components arranged in a target order.

10. The method according to claim 9, wherein the target order is a first order or a second order, the target optical component is a first available optical component in the optical component sequence, an electrical signal corresponding to the available optical component comprises the beat frequency signal, the first order is an ascending order of corresponding comb frequency values, and the second order is a descending order of corresponding comb frequency values.

11. The method according to any one of claims 8 to 10, wherein the respectively superimposing to-be-measured light with a plurality of optical components comprises:
adjusting each optical component in the optical component sequence to linearly polarized light in a first polarization direction;
adjusting the to-be-measured light to linearly polarized light in a second polarization direction, wherein the first polarization direction is not perpendicular to the second polarization direction; and
superimposing each adjusted optical component with adjusted to-be-measured light, to obtain a multiplexed optical signal corresponding to each optical component.

12. An optical wavelength control device, comprising an optical wavelength adjustment apparatus and the optical wavelength measurement apparatus according to any one of claims 1 to 7, wherein
the optical wavelength adjustment apparatus is configured to: obtain a measured value of a wavelength of to-be-measured light from the optical wavelength measurement apparatus; and control, based on a difference between the measured value and a target value, a light source device of the to-be-measured light to adjust a light emitting wavelength to the target value.

13. Alight emitting system, comprising a light source device and the optical wavelength control device according to claim 12.

14. The light emitting system according to claim 13, wherein the light source device is a laser.
